# EUROPÄISCHE PATENTANMELDUNG

(11) **EP 1 715 224 A1**
(43) Veröffentlichungstag der Anmeldung: **25.10.2006**
(21) Anmeldenummer: 05008409.4
(22) Anmeldetag: 18.04.2005
(51) Int. Cl.: F16J 15/447

(54) **Dichtung für eine Strömungsmaschine**

(71) Anmelder: SIEMENS AKTIENGESELLSCHAFT, 80333 München (DE)
(72) Erfinder: De Lazzer, Armin, Dr., 45479 Mülheim an der Ruhr (DE)

(57) **Zusammenfassung**

Die Erfindung betrifft eine Dichtungsanordnung mit einer auf einer Oberfläche der strömungstechnischen Komponente (1, 2) angeordneten Dichtlippe (3, 4, 5), wobei die Dichtlippe (3, 4, 5) derart angeordnet ist, dass die Längsrichtung (8) im wesentlichen senkrecht zu einer Leckageströmungsrichtung (7) verläuft, wobei die Leckageströmungsrichtung (7) im wesentlichen parallel zu einer im Betrieb ausgebildeten Leckageströmung verläuft. Die Dichtlippe (3, 4, 5) ist hierbei in der Längsrichtung (8) auf der Oberfläche wellenförmig ausgebildet.

## Beschreibung

Die Erfindung betrifft eine strömungstechnische Komponente mit einer auf einer Oberfläche der strömungstechnischen Komponente angeordneten Dichtlippe, wobei die Dichtlippe derart angeordnet ist, dass die Längsrichtung im wesentlichen senkrecht zu einer Leckageströmungsrichtung verläuft, wobei die Leckageströmungsrichtung im wesentlichen parallel zu einer im Betrieb ausgebildeten Leckageströmung verläuft. Des Weiteren betrifft die Erfindung ein Verfahren zur Herstellung einer strömungstechnischen Komponente sowie eine Verwendung einer strömungstechnischen Komponente.

Um den Wirkungsgrad einer Strömungsmaschine zu erhöhen, ist es erforderlich, Leckageströmungen zwischen rotierenden strömungstechnischen Komponenten und feststehenden strömungstechnischen Komponenten zu reduzieren. Unter der Sammelbezeichnung Strömungsmaschinen werden Dampf- und Gasturbinen, Windräder, Kreiselpumpen und Kreiselverdichter sowie Propeller zusammengefasst. Allen diesen Maschinen ist gemeinsam, dass sie dem Zweck dienen, einem Fluid Energie zu entziehen, um damit eine andere Maschine anzutreiben oder umgekehrt einem Fluid Energie zuzuführen, um dadurch den Druck des Fluids zu erhöhen. Mit Fluid werden Flüssigkeiten und Gase bezeichnet, die strömende Bewegungen ausführen können.

Eine rotierende strömungstechnische Komponente einer Dampfturbine als Ausführungsform einer Strömungsmaschine wäre beispielsweise eine Welle oder einen Rotor. Eine feststehende strömungstechnische Komponente wäre beispielsweise ein Innengehäuse.

Bekannt sind sog. Bürstendichtungen, die unter dem Obergriff der Berührungsdichtungen fallen. Die Bürstendichtungen weisen ein Dichtmittel mit flexiblen Enden auf, das an einer rotierenden Komponente anliegt. Dadurch entsteht Reibung, was zu Wirkungsgradverlusten führt.

Bekannt sind die sog. Labyrinth-Dichtungen, die eine berührungslose Dichtung darstellen. Genauer genommen, wird unterschieden zwischen reinen Labyrinth-, gegenüberstehenden Dichtspitzen, Durchblick-Labyrinth- und gestuften Labyrinth-Dichtungen.

Ein durch eine berührungslose Dichtung strömender Leckagestrom kann unter Umständen eine Drallkomponente, d. h. eine Geschwindigkeitskomponente in Umfangsrichtung aufweisen. Diese Drallkomponente könnte das gesamte rotierende System, umfassend eine Welle oder Rotor und einen Stator, rotordynamisch anregen.

Die Labyrinth-Dichtungen weisen sog. Dichtlippen auf, die zwischen zwei strömungstechnischen Komponenten angeordnet werden. Diese Dichtlippen sind in der Regel länglich und schmal ausgebildet. Die Dichtlippen werden derart angeordnet, dass sie im wesentlichen senkrecht zu einer Leckageströmung ausgerichtet sind. Zwischen der Spitze der Dichtlippe und der gegenüberliegenden strömungstechnischen Komponente besteht ein kleiner Spalt. Dadurch wird eine Drosselstelle erzeugt, deren Drosselwirkung eine Reduktion des Leckagestroms erreicht.

Werden die Dichtlippen auf einem Rotor als Ausführungsform einer strömungstechnischen Komponente angeordnet, so sind diese Dichtlippen in der Regel rotationssymmetrisch angeordnet und haben die Form eines geschlossenen Kreises. Es sind auch spiralförmige Ausführungsformen bekannt. Ein vollständiger gasdichter Abschluss gegenüber einer Umgebung ist allerdings mit einer Labyrinth-Dichtung nicht erreichbar. Die Bestrebungen gehen demnach dahin, den Leckagestrom durch eine Labyrinth-Dichtung zu minimieren.

Da setzt die Erfindung an, deren Aufgabe es ist, eine strömungstechnische Komponente anzugeben, auf der eine Dichtlippe angeordnet ist, dessen Ausgestaltung eine Reduzierung eines Leckagestromes bewirkt.

Eine weitere Aufgabe der Erfindung ist es, ein Verfahren zur Herstellung einer strömungstechnischen Komponente anzugeben, sowie eine Verwendung der strömungstechnischen Komponente anzugeben.

Die auf die strömungstechnische Komponente hin gerichtete Aufgabe wird gelöst durch eine strömungstechnische Komponente mit einer auf einer Oberfläche der strömungstechnischen Komponente angeordneten Dichtlippe, wobei die Dichtlippe derart angeordnet ist, dass die Längsrichtung im wesentlichen senkrecht zu einer Leckageströmung verläuft, wobei die Leckageströmungsrichtung im wesentlichen parallel zu einer im Betrieb ausgebildeten Leckageströmung verläuft, wobei die Dichtlippe in der Längsrichtung auf der Oberfläche wellenförmig verläuft.

Die Erfindung geht von dem Aspekt aus, dass die Strömungsverhältnisse mit wellenförmig ausgebildeten Dichtlippen gegenüber gerade ausgebildeten Dichtlippen anders ausgebildet sind. In dem allgemeinen Fall, in dem eine ebene strömungstechnische Komponente mit einer Dichtlippe versehen wird, wobei gegenüber dieser strömungstechnischen Komponente eine weitere strömungstechnische Komponente derart angeordnet ist, dass ein Spalt zwischen diesen beiden strömungstechnischen Komponenten entsteht, wird eine Leckageströmung derart beeinflusst, dass die Dichtwirkung verbessert wird. Dies hängt damit zusammen, dass ein evtl. beim Eintritt der Leckageströmung in die Dichtung vorhandener Drall wirksam reduziert wird. Das rotordynamische System wird hierdurch stabilisiert.

In einer vorteilhaften Weiterbildung ist die strömungstechnische Komponente als rotationssymmetrischer Rotor ausgebildet.

In einer weiteren vorteilhaften Weiterbildung ist die strömungstechnische Komponente als rotationssymmetrisches Innengehäuse ausgebildet.

Im Fall einer Strömungsmaschine ist die Ausbildung eines Spaltes zwischen einer drehbaren Komponente, wie dem rotationssymmetrischen Rotor und einem um den Rotor angeordneten Innengehäuse der Regelfall. Strömungstechnische Berechnungen haben gezeigt, dass gerade solch eine Spaltanordnung, die einem Kreissegment entspricht, durch die erfindungsgemäße Ausbildung der Dichtlippe gerade vorteilhaft beeinflusst wird. Die Dichtwirkung solch einer Spaltanordnung ist besonders wirksam.

In einer weiteren vorteilhaften Ausbildung ist die Dichtlippe derart angeordnet, dass die Längsrichtung mit einer Umfangsrichtung der strömungstechnischen Komponente zusammenfällt.

Dadurch entsteht der Vorteil, dass die Dichtwirkung weiter verbessert wird. In der Regel strömt der Leckagestrom senkrecht zu einer Umfangsrichtung. Drallkomponenten würden sich dadurch in Umfangsrichtung gegenseitig aufheben bzw. minimieren.

In einer weiteren vorteilhaften Weiterbildung ist die Dichtlippe dadurch gekennzeichnet, dass sie in Längsrichtung sinusförmig verläuft.

Dadurch erreicht man noch eine weitere Verbesserung der Dichtwirkung. Strömungstechnische Rechnungen haben gezeigt, dass eine sinusförmige Ausführung einer Dichtlippe die charakteristischen Strömungsgrößen einer Leckageströmung derart beeinflusst, dass die Leckageströmung insgesamt abgebremst wird. Es hat sich gezeigt, dass ein Austrittsdrall wirksam vermindert wird. Unter einem Austrittsdrall ist eine Geschwindigkeitskomponente der Leckageströmung in Umfangsrichtung zu verstehen.

In einer weiteren vorteilhaften Ausgestaltung ist die Dichtlippe in der Längsrichtung zick-zack-förmig ausgebildet.

Durch diese Maßnahme ist die Dichtlippe besonders einfach zu fertigen. Es würden sich dadurch Fertigungskosten verringern.

Die auf das Verfahren hin gerichtete Aufgabe wird gelöst durch ein Verfahren zur Herstellung einer strömungstechnischen Komponente mit einer Dichtlippe, die derart angeordnet wird, dass ein im Betrieb der strömungstechnischen Komponente entlang einer Leckageströmungsrichtung strömendes Leckfluid im wesentlichen senkrecht zur Dichtlippe verläuft, wobei die Dichtlippe wellenförmig ausgebildet wird.

Die Vorteile der somit hergestellten strömungstechnischen Komponente ergeben sich entsprechend den Vorteilen der auf die Vorrichtung hin gerichteten Aufgabe.

Schließlich wird die erfindungsgemäße strömungstechnische Komponente in einer Strömungsmaschine verwendet.

Ausführungsbeispiele der Erfindung werden nachfolgend anhand der Zeichnungen beschrieben. Diese sollen die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen.

Dabei haben mit denselben Bezugszeichen versehene Komponenten die gleiche Funktionsweise.

Dabei zeigen:
- Figur 1: eine perspektivische Darstellung zweier strömungstechnischer Komponenten gemäß dem Stand der Technik;
- Figur 2: eine Seitenansicht der in Figur 1 dargestellten strömungstechnischen Komponenten;
- Figur 3: explosionsartige schematische Darstellung zweier strömungstechnischer Komponenten;
- Figur 4: Schnittdarstellung einer Dampfturbine;
- Figur 5: Schnittdarstellung einer Schaufelreihe;
- Figur 6: vergrößerte Darstellung des Ausschnitts A aus Figur 5.
- Figur 7: perspektivische Darstellung einer Anordnung mit zwei strömungstechnischen Komponenten.

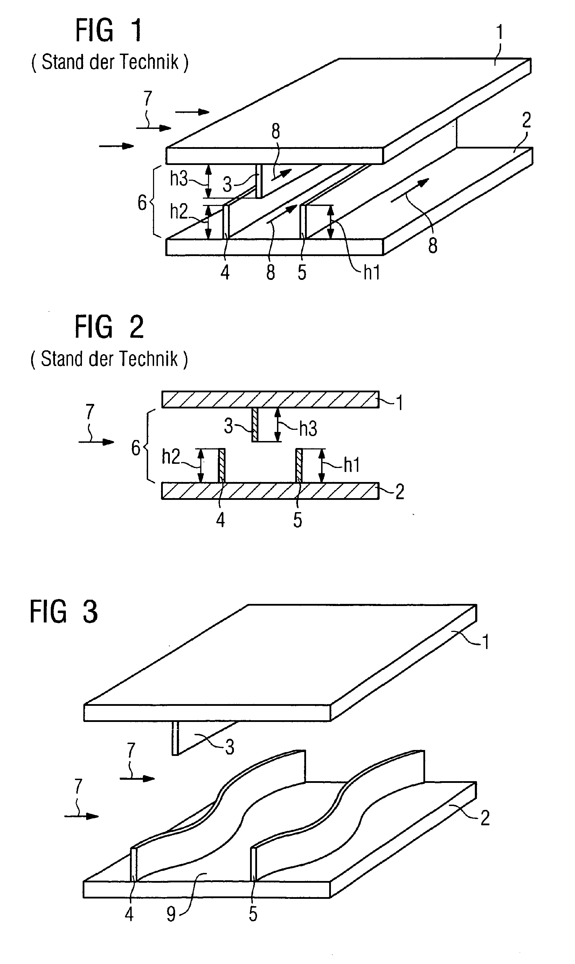

In der Figur 1 ist eine Anordnung mit zwei strömungstechnischen Komponenten 1 und 2 gemäß Stand der Technik dargestellt. Die strömungstechnische Komponente 1 umfasst eine gerade ausgebildete Dichtlippe 3. Die Strömungskomponente 1 sowie die Strömungskomponente 2 erstrecken sich über eine Ebene. Die Strömungskomponente 2 umfasst eine zweite Dichtlippe 4 und eine dritte Dichtlippe 5. Zwischen der Strömungskomponente 1 und der Strömungskomponente 2 ist ein Spalt 6, durch den im Betrieb Leckagefluid in einer Leckageströmungsrichtung 7 strömt. Die Dichtlippen 3, 4, 5 ragen von der jeweiligen strömungstechnischen Komponente 1 oder 2 in Richtung der gegenüberliegenden strömungstechnischen Komponente und sind in Leckageströmungsrichtung 7 hintereinander angeordnet. Die Höhe h1 ist mit der Höhe h2 der ersten Dichtlippe 4 identisch. Unterschiedliche Höhen sind jedoch denkbar. Ein durch den Spalt 6 strömendes Leckagefluid wird durch die Dichtlippen 3, 4, 5 gedrosselt bzw. abgebremst.

In der Figur 2 ist eine Schnittdarstellung der in Figur 1 dargestellten Anordnung zu sehen. Die Dichtlippen 3, 4 und 5 sind in einer Längsrichtung 8 gerade ausgebildet gemäß dem Stand der Technik. Die Leckageströmungsrichtung 7 ist hierbei im wesentlichen senkrecht zur Längsrichtung 8. Ein Leckagestrom strömt im Betrieb im wesentlichen parallel zu der Leckageströmungsrichtung 7.

In der Figur 3 ist eine erfindungsgemäße Anordnung zu sehen. Die Anordnung gemäß Figur 1 bzw. Figur 2 wird derart weitergebildet, dass eine Dichtlippe 3, 4 oder 5 in der Längsrichtung auf der Oberfläche 9 der strömungstechnischen Komponente 2 oder 1 wellenförmig verläuft.

Es können sämtliche Dichtlippen derart ausgebildet sein, dass diese in ihrer Längsrichtung auf der Oberfläche wellenförmig verlaufen. In alternativen Ausführungsformen ist es möglich, dass lediglich eine Dichtlippe 3, 4 oder 5 wellenförmig ausgebildet ist.

Die strömungstechnische Komponente 1 kann ein rotationssymmetrischer Rotor 16 und die strömungstechnische Komponente 2 kann ein um den Rotor ausgebildetes Innengehäuse 14 sein.

Es sind aber auch andere Ausführungsformen der strömungstechnischen Komponenten 1, 2 denkbar. So können die strömungstechnischen Komponenten 1, 2 flächenartig ausgebildet sein, wobei die strömungstechnischen Komponenten 1, 2 jeweils eine Ebene aufspannen.

Diese beiden Elemente können einander gegenüberliegend angeordnet sein. Im Betrieb bewegen sich die strömungstechnischen Komponenten relativ zueinander, wobei diese Bewegung in Richtung einer Normalen-Richtung der Ebenen erfolgt. Eine strömungstechnische Komponente 1 kann z.B. feststehen und die andere strömungstechnische Komponente 2 kann bewegbar angeordnet sein.
Es ist aber auch denkbar, dass beide strömungstechnischen Komponenten 1, 2 fest angeordnet sind oder beide gegeneinander bewegbar angeordnet sind.

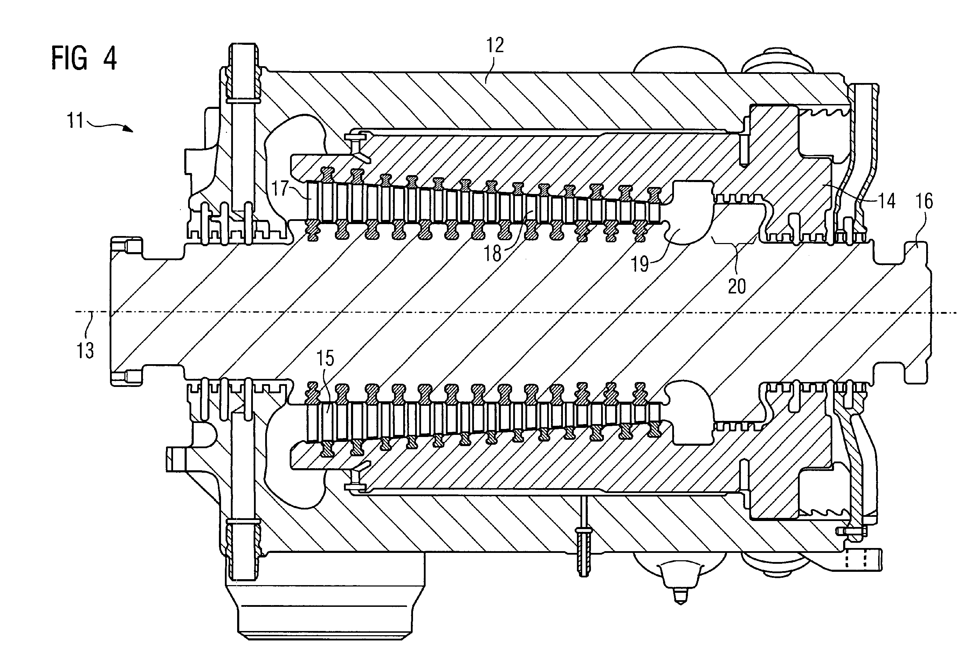

In der Figur 4 ist eine Dampfturbine 11 als Ausführungsform einer Strömungsmaschine zu sehen. Die Dampfturbine 11 weist ein Außengehäuse 12, das im wesentlichen rotationssymmetrisch um eine Rotationsachse 13 ausgebildet ist, auf. Innerhalb des Außengehäuses 12 ist ein Innengehäuse 14 rotationssymmetrisch angeordnet. Das Innengehäuse 14 umfasst mehrere Reihen Leitschaufeln. In der Figur 4 ist lediglich eine Leitschaufel mit dem Bezugszeichen 15 der Übersichtlichkeit wegen versehen. Des Weiteren weist die Dampfturbine 11 einen um die Rotationsachse 13 drehbar gelagerten Rotor 16 auf. Der Rotor 16 weist Laufschaufeln 17 auf. Der Übersichtlichkeit wegen ist lediglich eine Laufschaufel in der Figur 4 mit dem Bezugszeichen 17 versehen. Der Rotor 16 wird innerhalb des Innengehäuses 14 derart angeordnet, dass abwechselnd die Laufschaufel 17 mit der Leitschaufel 15 einen Kanal 18 bildet. Im Betrieb strömt durch die Einlassöffnung 19 heißer Dampf der abwechselnd die Laufschaufel 17 und die Laufschaufel 15 umströmt. Der Dampf entspannt sich und gibt seine Energie in Form von Rotationsenergie ab, wodurch der Rotor 16 in eine Drehbewegung versetzt wird. Der Frischdampf strömt zum größten Teil durch den Kanal 18. Allerdings strömt ein Leckagestrom z.B. zwischen dem Rotor 16 und einer Spitze einer Leitschaufel 15. Ebenso kann ein Leckagestrom zwischen der Leitschaufel 17 und dem Innengehäuse 14 strömen. Genauso ist ein Leckagestrom zwischen dem Rotor 16 und dem Innengehäuse 14 im Bereich eines Schubausgleichskolbens 20 möglich. Diese drei Stellen werden mittels Dichtungen abgedichtet.

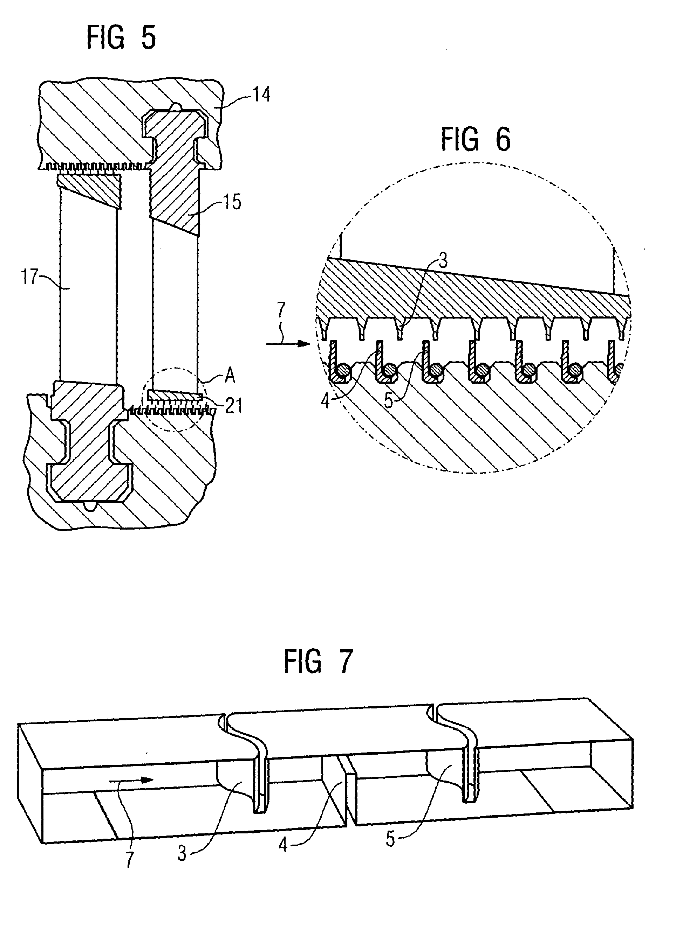

In der Figur 5 ist eine vergrößerte Schnittdarstellung einer Schaufelreihe zu sehen. Eine am Innengehäuse 14 fest angeordnete Leitschaufel 15 weist eine Dichtungsanordnung an einer Spitze 21 auf.

In der Figur 6 ist eine vergrößerte Darstellung des Ausschnitts A aus der Figur 5. In der Figur 6 sind beispielhaft mehrere Dichtlippen in einer Schnittdarstellung zu sehen. In der Figur 6 ist lediglich eine Dichtlippe mit dem Bezugszeichen 3 und zwei gegenüberliegende Dichtlippen mit dem Bezugszeichen 4 und 5 versehen. Die Spitze der Leitschaufel 15 als auch die Spitze der Laufschaufel 17 kann als strömungstechnische Komponente 1, 2 bezeichnet werden.

In der Figur 7 ist eine schematische Darstellung einer Dichtungsanordnung zu sehen. In einer Leckageströmungsrichtung 7 strömt ein Leckagefluid in Richtung der Dichtlippe 3. Die Dichtlippe 3 ist hierbei in ihrer Längsrichtung wellenförmige ausgebildet. Die Dichtlippe 3 kann auch zick-zack-förmig in ihrer Längsrichtung ausgebildet sein. Ebenso ist eine sinusförmige Ausbildung der Dichtlippe in Längsrichtung möglich.

Die strömungstechnische Komponente 1 kann als rotationssymmetrisches Innengehäuse 14 ausgebildet sein.

Die strömungstechnische Komponente 2 kann als rotationssymmetrischer Rotor 16 ausgebildet sein.

## Patentansprüche

1. Strömungstechnische Komponente (1, 2) mit einer auf einer Oberfläche (9) der strömungstechnischen Komponente (1, 2) angeordneten Dichtlippe (3, 4, 5),
wobei die Dichtlippe (3, 4, 5) derart angeordnet ist, dass die Längsrichtung (8) im wesentlichen senkrecht zu einer Leckageströmungsrichtung (7) verläuft,
wobei die Leckageströmungsrichtung (7) im wesentlichen parallel zu einer im Betrieb ausgebildeten Leckageströmung verläuft,
**dadurch gekennzeichnet, dass**
die Dichtlippe (3, 4, 5) in der Längsrichtung (8) auf der Oberfläche (9) wellenförmig verläuft.

2. Strömungstechnische Komponente (1, 2) nach Anspruch 1,
**dadurch gekennzeichnet, dass**
die strömungstechnische Komponente (1, 2) als rotationssymmetrischer Rotor (16) ausgebildet ist.

3. Strömungstechnische Komponente (1, 2) nach Anspruch 1,
**dadurch gekennzeichnet, dass**
die strömungstechnische Komponente (1, 2) als rotationssymmetrisches Innengehäuse (14) ausgebildet ist.

4. Strömungstechnische Komponente (1, 2) nach Anspruch 2 oder 3,
**dadurch gekennzeichnet, dass**
die Dichtlippe (3, 4, 5) derart angeordnet ist, dass die Längsrichtung (8) mit einer Umfangsrichtung der strömungstechnischen Komponente (1, 2) zusammenfällt.

5. Strömungstechnische Komponente (1, 2) nach einem der Ansprüche 1 bis 4,
**dadurch gekennzeichnet, dass**
die Dichtlippe (3, 4, 5) in der Längsrichtung (8) sinusförmig verläuft.

6. Strömungstechnische Komponente (1, 2) nach einem der Ansprüche 1 bis 4,
**dadurch gekennzeichnet, dass**
die Dichtlippe (3, 4, 5) in der Längsrichtung (8) zick-zack-förmig verläuft.

7. Verfahren zur Herstellung einer strömungstechnischen Komponente (1, 2) mit einer Dichtlippe (3, 4, 5), die derart angeordnet wird, dass ein im Betrieb der strömungstechnischen Komponente (1, 2) entlang einer Leckageströmungsrichtung (7) strömendes Leckfluid im wesentlichen senkrecht zur Dichtlippe (3, 4, 5) verläuft,
**dadurch gekennzeichnet, dass**
die Dichtlippe (3, 4, 5) wellenförmig ausgebildet wird.

8. Verwendung einer strömungstechnischen Komponente (1, 2) gemäß einem der Ansprüche 1 bis 6 in einer Strömungsmaschine.
